# EUROPÄISCHE PATENTSCHRIFT

(11) **EP 0 742 166 B1**
(45) Veröffentlichungstag und Bekanntmachung des Hinweises auf die Patenterteilung: **24.02.1999**
(21) Anmeldenummer: 96106934.1
(22) Anmeldetag: 02.05.1996
(51) Int. Cl.: B65G 59/02, B65G 61/00, B65H 3/24

(54) **Verfahren und Vorrichtung zum Depalettieren**
Method of and device for depalletizing
Procédé et dispositif de dépalletisation

(30) Priorität: 02.05.1995 DE 19515998
(43) Veröffentlichungstag der Anmeldung: 13.11.1996
(73) Patentinhaber: PROFINISH S.A., 6900 Lugano-Paradiso (CH)
(72) Erfinder: Kracht, Heinrich, 32312 Lübbecke (DE)
(74) Vertreter: Patentanwälte Dr. Solf & Zapf

(56) Entgegenhaltungen:
- DE-A- 3 139 828
- DE-A- 3 940 190
- DE-A- 4 142 162
- DE-B- 1 907 123
- DE-U- 7 111 628
- DE-U- 7 835 336
- US-A- 4 988 264

## Beschreibung

Die Erfindung betrifft ein Verfahren und eine Vorrichtung zum Depalettieren bzw. Entladen von Paletten, auf denen quaderförmige Produkte in mehreren Stapellagen gestapelt sind, wobei die Produkte in jeder Stapellage in Stapelreihen unterteilt angeordnet sind.

Typische Produkte, die in dieser Art und Weise auf Paletten gestapelt werden, sind flache quaderförmige Produkte, wie z.B. Falzbogen, Bücher, Broschüren, Kartons oder dergleichen.

Eine Depalettiervorrichtung zum Entladen von mit derartigen Produkten beladenen Paletten ist aus der DE 41 42 162 A1 bekannt. Diese Depalettiervorrichtung weist ein Förderband mit einem oberen und unteren Trum auf, das seitlich angrenzend neben der beladenen Palette angeordnet ist, wobei sich der obere Trum des Förderbandes auf Höhe einer Zwischenfläche zwischen der obersten und der nachfolgenden Stapellage befindet, so daß durch Querverschieben der obersten Stapellage die an das Förderband angrenzende Stapelreihe auf das Förderband geschoben wird.

Um einen Zwischenraum zwischen der abzuführenden Stapelreihe und einer nachfolgenden Stapelreihe der Stapellage zu erhalten, wird das Förderband mit der abzuführenden Stapelreihe seitwärts verschoben. Über dem Förderband befindet sich ein synchron mit diesem angetriebenes Oberband mit der Aufgabe, die entstapelte am Rand des Förderbands aufliegende Stapelreihe am Verrutschen zu hindern.

Das Abziehen bzw. Abschieben der Stapellagen erfolgt bei dieser Vorrichtung mittels biegsamer Zwischenlagen, die zwischen die einzelnen Stapellagen jeweils paarweise eingebracht sind und seitlich am Stapel vorstehen, wobei die die oberste Stapellage umschließenden Zwischenlagen mittels Walzen abgezogen werden, um diese oberste Stapellage mitzunehmen.

Nachteilig an dieser bekannten Depalettiervorrichtung ist, daß das Förderband zum Vereinzeln der abzuführenden Stapelreihe von einer Stapellage in seiner Gesamtheit quer verschoben wird. Zudem liegt die abzuführende Produktreihe nicht zentral sondern angrenzend an einem seitlichen Rand des Förderbandes auf, so daß ein zusätzliches Oberband zum Fixieren der Produkte auf dem Förderband vorgesehen ist, um ein Verrutschen zu verhindern.

Ferner weisen speziell bei dieser bekannten Vorrichtung zum Depalettieren die Einrichtungen zum Abziehen der obersten Produktlage viele Einzelelemente, wie Greifer, Reib- und Saugwalzen auf, um die biegsamen Zwischenlagen zu erfassen und abzuziehen. Diese Vielzahl von Einzelelementen ist aufgrund ihrer Komplexität störanfällig und wartungsintensiv.

Ferner ist aus der DE 39 40 190 A1 ein Verfahren zum fortlaufenden lagenweisen Be- und Entladen von Paletten bekannt. Hierzu wird ein Zwischenträger verwendet, der zwischen die einzelnen Lagen eines Stapels von beispielsweise Falzbogen, Zeitschriften, Bücher, Brochüren eingelegt wird. Der Zwischenträger weist schmale, sich fast über die gesamte Längsausdehnung des Zwischenträgers erstreckende Längsausnehmungen auf. Zum Vereinzeln der auf dem Zwischenträger liegenden Reihen von Stapelgut wird jeweils der oberste Zwischenträger eines Stapels mit einer Querverschiebeeinrichtung von Stapel abgenommen und seitlich abgeschoben, so daß jeweils eine Reihe des auf dem Zwischenträger befindlichen Stapelgutes über einer Transporteinrichtung angeordnet ist. Die Transporteinrichtung besteht aus schmalen Förderbändern, die angehoben werden können, wobei sie die Längsausnehmung des Zwischenträgers durchgreifen und das Stapelgut vom Zwischenträger heben. Das so angehobene Stapelgut kann dann mittels der Förderbänder abtransportiert werden, wobei die auf dem Zwischenträger befindlichen Reihen von Stapelgut voneinander vereinzelt werden.

Bei diesem bekannten Verfahren ist es zwar möglich, quaderförmige Produkte, die in mehreren Stapellagen auf einer Palette gestapelt sind, zu depalettieren, wobei jeweils eine vorderste Reihe der Produktlage vereinzelt wird. Die hierbei verwendete Vorrichtung ist jedoch sehr kompliziert aufgebaut und benötigt einen speziell ausgebildeten Zwischenträger mit schmalen, sich fast über die gesamte Längsausdehnung erstreckende Längsausnehmungen.

Aus der DE 31 39 828 C2 geht eine Stapeleinrichtung hervor, die einen Stapelarm aufweist, der aus einem Förderband mit einem oberen und einem unteren Trum besteht. Zwischen dem oberen und unteren Trum ist ein Zwischenblech angeordnet, und oberhalb des oberen Trums befindet sich ein Schieber, um jeweils Reihen von Packgut auf das Zwischenblech zu schieben. Das mit einer Reihe von Packgut beladene Zwischenblech wird über einer Palette bzw. über einem Stapel an der Stelle angeordnet, an der die Reihe von Packgut abgelegt werden soll. Durch Zurückziehen des Zwischenbleches wird die Packgutreihe vom stehenden Schieber abgestreift, wobei die Packgutreihe auf dem Stapel abgelegt wird.

Diese Stapeleinrichtung ist nur zum Stapeln aber nicht zum Depalettieren von Packgut geeignet.

In dem Gebrauchsmuster DE 78 35 336 U1 ist eine Vorrichtung zum Vereinzeln von Leisten, Brettern und dgl. beschrieben. Die Leisten bzw. Bretter sind zu einem Stapel aufgeschichtet, wobei die oberste Lage von einem Mitnehmer auf einen Förderer geschoben wird. Der Förderer besteht aus einem Rollenförderer mit in Förderrichtung schräg gestellten Förderrollen. Durch die Schrägstellung der Förderrollen wird jeweils die vorderste Leiste der obersten Lage des Stapels sowohl in Förderrichtung befördert als auch von den übrigen Leisten der Lage abgezogen bzw. vereinzelt.

Mit einer solchen Vorrichtung können keine Stapel von Druckbogen vereinzelt werden, da durch die permanente Querkomponente bei der Förderung auf dem Rollenförderer das Einhalten der Stapelform der lose aufeinanderliegenden Druckbogen nicht gewährleistet werden kann.

Aus den Patents Abstracts JP-A- 6-263236 ist eine Vorrichtung bestehend aus einem Förderband und einer über dem Förderband angeordneten beweglichen Platte bekannt, wobei sich über der Platte ein Schieber befindet. Durch Zurückziehen der Platte werden auf der Platte befindliche Arbeitsstücke auf dem Förderband abgelegt, das sich mit kontinuierlicher Geschwindigkeit fortbewegt, so daß zwischen den einzelnen Reihen von Arbeitsstücken vorbestimmte Abstände entstehen.

Beim Ablegen der Förderstücke auf dem Förderband fallen diese auf das Förderband, wobei sie schlagartig beschleunigt werden. Diese Vorrichtung dient nicht zum Depalettieren von auf Paletten gestapelten Produkten, sondern zum Ablegen von Arbeitsstücken mit vorbestimmtem Abstand auf dem Förderband. Diese Vorrichtung ist somit nicht zum Depalettieren von Falzbögen, Büchern, Broschüren, Kartons od.dgl. geeignet.

Weiterhin ist in der EP 0 499 899 A1 eine Vorrichtung zum Vereinzeln von paketweise zusammengestelltem Stückgut beschrieben, wobei das Stückgut von einem Tisch durch ein Eingriffsteil direkt auf ein Förderband geschoben wird.

Von der US 4,988,264 geht eine Vorrichtung zum Depalettieren hervor, die einzelne Lagen von auf Paletten gestapelten Gutes mittels eines Schiebers auf ein Förderband abschiebt. Die Lage von Gut, die sich unmittelbar unter der abzuschiebenden Lage befindet, wird mit einer Halteeinrichtung festgehalten, so daß eine Mitnahme dieser unteren Lage verhindert wird. Vorzugsweise ist zwischen einer jeden Lage eine Abstandsplatte angeordnet.

Eine ähnliche Vorrichtung ist in dem Gebrauchsmuster DE-U-71 11 628 beschrieben. Sie weist einen verfahrbaren Schieber auf, mit dem jeweils eine Lage von auf einer Palette gestapelten Gut abgeschoben werden kann. Zwischen den einzelnen Lagen befinden sich Zwischenlagen, die während des Abschiebens mit einer Zange festgehalten werden.

Aus der DE-B-19 07 123 ist eine Vorrichtung zum Vereinzeln von reihenweise in einer Ebene angeordnetem Gut bekannt. Die Vorrichtung weist eine Verschiebeeinrichtung auf, die jeweils eine Reihe des Gutes von einem Aufsetzplatz auf eine Vorschubplatte schiebt. Die Vorschubplatte ist mit geringem Abstand über einer Abstellfläche angeordnet. Nachdem eine Reihe von Gut auf der Vorschubplatte abgestellt worden ist, wird die Vorschubplatte unter der einen Reihe von Gut weggezogen, so daß diese Reihe auf der Abstellfläche abgesetzt wird. Diese auf der Abstellfläche abgesetzte Reihe wird dann mit einer Vorderkante der Vorschubplatte auf einen Abstell- oder Abtransportplatz abgeschoben.

Aufgabe der Erfindung ist es, ein Verfahren und eine Vorrichtung zum Depalettieren zu schaffen, mit denen eine abzuführende Stapelreihe mit einfachen Mitteln sicher von einer Stapellage vereinzelt und auf einem Förderer genau positioniert abgelegt werden kann.

Diese Aufgabe wird durch ein Verfahren nach Anspruch 1 bzw. durch eine Vorrichtung nach Anspruch 7 gelöst. Vorteilhafte Ausgestaltungen der Erfindung sind in den Unteransprüchen gekennzeichnet.

Mit dem Verfahren nach Anspruch 1 wird die abzuführende bzw. zu entstapelnde Stapelreihe über einen im wesentlichen ebenflächigen Übergang von einer Zwischenplatte, die zwischen den einzelnen Stapellagen eingebracht ist, auf eine Depalettierplatte abgeschoben und die auf der Depalettierplatte aufliegende Stapelreihe an beliebiger Stelle auf dem Förderband durch Abstreifen von der Depalettierplatte abgelegt. Die Verwendung der Depalettierplatte bewirkt eine räumliche Trennung der abzuführenden Stapelreihe von der nachfolgenden Stapelreihe der Stapellage und ermöglicht den Einsatz von einfachen Schiebe- und Abstreifelementen, wie z.B. einer Depalettierleiste zum Abschieben der obersten Stapellage und einer Abstreifleiste zum Abstreifen der Stapelreihe von der Depalettierplatte, so daß ein zuverlässiger und wartungsarmer Betrieb gewährleistet wird.

Die Erfindung wird beispielhaft näher anhand des in der Zeichnung dargestellten Ausführungsbeispiels beschrieben. Es zeigen:

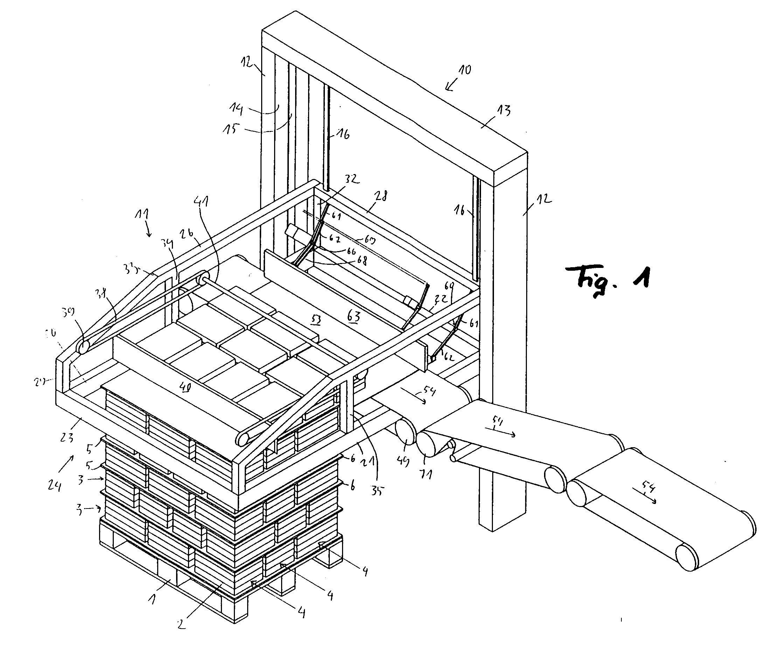

- Fig. 1: schematisch eine erfindungsgemäße Vorrichtung zum Depalettieren einer Palette in einer perspektivischen Ansicht;

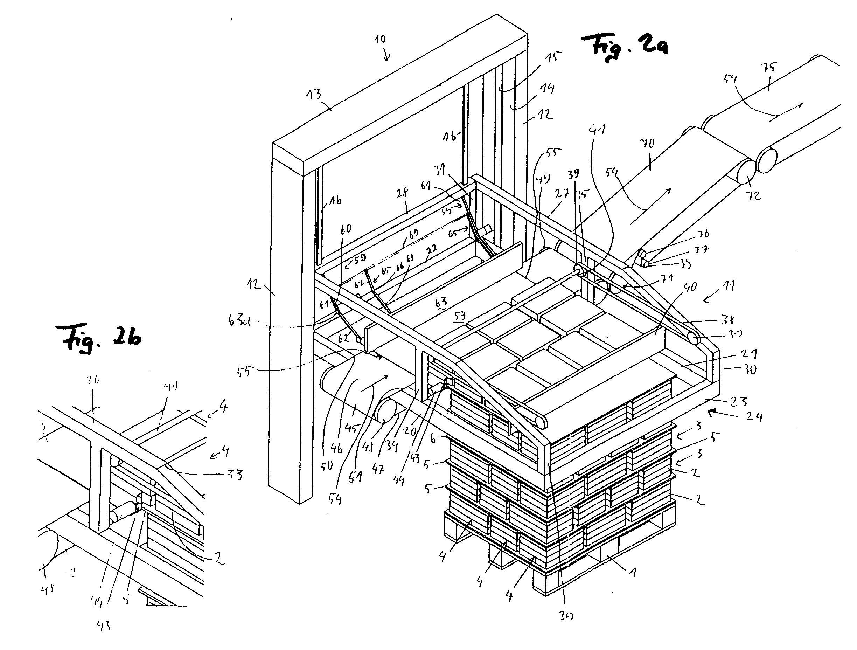

- Fig. 2a: schematisch eine weitere perspektivische Ansicht einer erfindungsgemäßen Vorrichtung zum Depalettieren einer Palette aus einer anderen Blickrichtung;
- Fig. 2b: schematisch einen Ausschnitt im Bereich eines Klemmbackens der in Fig. 2a dargestellten Vorrichtung;
- Fig. 3a bis 3e: schematisch eine Prinzipdarstellung der erfindungsgemäßen Vorrichtung zum Depalettieren einer Palette in einer Seitenansicht, wobei die Einrichtung zum Depalettieren jeweils in einem fortgeschrittenen Arbeitsschritt dargestellt ist.

Das erfindungsgemäße Verfahren und die erfindungsgemäße Vorrichtung zum Depalettieren sind zum maschinellen Entladen einer mit quaderförmigen Produkten 2 beladenen Palette 1 vorgesehen.

Die Produkte 2 sind auf der Palette 1 in mehreren in der Draufsicht rechteckigen Stapellagen 3 gestapelt, wobei die Produkte 2 innerhalb einer Stapellage 3 in mehrere in der Draufsicht rechteckige Stapelreihen 4 unterteilt angeordnet sind. Die Stapelreihen 4 können wiederum aus mehreren kleinen quaderförmigen Produktsäulen bestehen, wobei typische, derart auf Paletten gestapelte Produkte Falzbogen, Bücher, Kartons, Broschüren oder dergleichen sind. Zwischen den einzelnen Stapellagen 3 befindet sich jeweils eine dünne Zwischenplatte 5, vorzugsweise aus einem harten, oberflächlich glatten Material, wie z. B. eine Kunststoff-Hartfaserplatte oder ein Metallblech. Typische Abmessungen von Paletten 1 und den entsprechenden Zwischenplatten 5 betragen 1200 x 800 mm bzw. 1200 x 1000 mm. Die Paletten 1 sind erfindungsgemäß so beladen, daß die Zwischenplatten 5 jeweils zumindest an der Entnahmeseite mit einem Überstand 6 von z.B. etwa 10 bis 30 mm über die darunter befindliche Stapellage kragen. Vorzugsweise werden an allen vier Seiten einer beladenen Palette überkragende Überstände 6 der Zwischenplatten 5 mit einer Breite von etwa 20 mm vorgesehen, so daß die Palette an allen vier Seiten entladen werden kann. Zwischen der Palette 1 und der untersten Stapellage 3 befindet sich ebenfalls eine Zwischenplatte 5, die zweckmäßigerweise dauerhaft an der Palette 1 befestigt sein kann.

Die erfindungsgemäße Vorrichtung weist einen Portalrahmen 10 auf, an dem ein Depalettierarm 11 zum Depalettieren der Palette vertikal verschiebbar befestigt ist.

Der Portalrahmen 10 besteht aus zwei vertikalen, parallelen Säulenträgern 12, die an ihrem oberen Ende mit einem Querträger 13 miteinander verbunden sind. Die Säulenträger 12 haben im Querschnitt eine etwa rechteckige Form, wobei an ihren sich gegenüberliegenden Seitenflächen 14 vertikal ausgerichtete Führungsschienen 15 vorgesehen sind, in denen der Depalettierarm 11 verschiebbar gelagert ist. Ferner sind im Portalrahmen 10 zwei Ketten 16 zum Heben und Senken des Depalettierarms 11 geführt, die vom Querträger 13 nach unten abgelenkt sind, sich vertikal nach unten erstrecken und am Depalettierarm 11 befestigt sind. Die Ketten 16 werden von einem nicht dargestellten Motor zum Anheben und Absenken des Depalettierarms 11 angetrieben.

Der Depalettierarm 11 weist zwei Längsstreben 20, 21 und zwei Querstreben 22, 23 auf, die ein Rechteck bilden. Die Querstrebe 22 des Depalettierarms 11 erstreckt sich zwischen den beiden Säulenträgern 12 des Portalrahmens 10, wobei der Depalettierarm 11 im Bereich der Enden der Querstrebe 22 in den Führungsschienen 15 geführt wird. Vom Portalrahmen 10 erstreckt sich der Depalettierarm 11 horizontal in der Art eines Auslegers, so daß er mit der Querstrebe 23 ein freies, in den Raum vorstehendes Ende 24 bildet.

Über der sich zwischen den Säulenträgern 12 erstreckenden Querstrebe 22 und den beiden Längsstreben 20, 21 ist jeweils eine zu den Streben parallel verlaufende Längs- bzw. Querleiste 26, 27, 28 vorgesehen, die an den Eckpunkten des Rahmenarms 10 mit kurzen vertikalen Stützleisten 29, 30, 31, 32 an den Streben 20, 21, 22, 23 befestigt ist, so daß der Depalettierarm 11 etwa die Form eines Quaders einnimmt. Die über den Längsstreben 20, 21 liegenden Längsleisten 26, 27 verlaufen vom freien Ende 24 in Richtung zum Portalrahmen 10 über etwa ein Drittel ihrer Länge ansteigend und gehen mit einem Knick 33 in einen horizontal verlaufenden Bereich über. Die Längsleisten 26, 27 sind jeweils durch eine weitere vertikale Stützleiste 34, 35 an den Längsstreben 20, 21 abgestützt, die vom Knick 33 etwas in Richtung zur Längsmitte des Depalettierarms 11 versetzt angeordnet sind.

Im Bereich zwischen den Längsleisten 26, 27, der sich vom freien Ende 24 etwa über die Hälfte der Länge des Depalettierarms 10 erstreckt, ist eine Einrichtung zum Abschieben einer obersten Stapellage 3 vorgesehen. Sie besteht aus zwei endlos geführten, parallel zu den Längsleisten 26, 27 angeordneten Zahnriemen bzw. Rollenketten 37, 38, die jeweils um zwei Zahnräder 39 geführt sind. Die Zahnräder 39 sind an den Längsleisten 26, 27 innerhalb des vom Rahmenarm 10 aufgespannten Quaders gelagert. Zwischen den Zahnriemen 37, 38 ist eine Abschiebeleiste 40 zum Abschieben der obersten Stapellage 3 gespannt, die aus einer schmalen, vertikalen Platte besteht und parallel zu den Querstreben 22, 23 angeordnet ist. Die Zahnriemen 37, 38 werden über eine gemeinsame Welle 41 angetrieben, wodurch die Abschiebeleiste 40 von dem freien Ende 24 des Depalettierarms 11 bis zu einem mittigen Bereich des Depalettierarms 11 bewegt wird, so daß sie die von den Zahnriemen 37, 38 aufgespannte Fläche abstreicht, die etwa der Fläche der zu entladenden Palette 1 entspricht.

Unterhalb der Zahnriemen 37, 38 ist an den Längsstreben 20, 21 jeweils ein Klemmbacken 43 mit einem ausfahrbaren Stellglied 44 befestigt, die gegenüberliegend angeordnet sind, so daß die Klemmbacken 43 bei ausgefahrenem Stellglied 44 eine Zwischenplatte 5 zwischen sich einklemmen können.

Zwischen der von den Zahnriemen 37, 38 aufgespannten Fläche und dem Portalrahmen 10 ist am Depalettierarm 11 ein endlos geführtes Förderband 45 vorgesehen, das sich quer zu den Längsstreben 20, 21 erstreckt. Das Förderband 45 weist ein oberes und ein unteres Trum 46, 47 auf und ist um zwei Umlaufwalzen 48, 49 geführt. Die Umlaufwalzen 48, 49 sind jeweils außenseitig an den Längsstreben 20, 21 befestigt, so daß sie außerhalb des vom Depalettierarm 11 aufgespannten Quaders angeordnet sind, und die Längsstreben 20, 21 den Bereich zwischen dem oberen und dem unteren Trum 46, 47 des Förderbands 45 durchgreifen. Der obere Trum 46 des Förderbands 45 hat eine zum Portalrahmen 10 zeigende Seitenkante 50 und eine Seitenkante 51, die zum freien Ende 25 des Depalettierarms 11 zeigt und mit den Längsseitenstreben 20, 21 und der Querstrebe 23 einen rechteckigen Bereich einschließt, der etwas größer als die Fläche der Palette 1 ist, so daß die Ladung einer Palette 1 von den Streben 20, 21, 23 und dem Förderband 45 umgriffen werden kann.

Auf dem oberen Trum 46 des Förderbandes 45 liegt eine rechteckige Depalettierplatte 53 mit zwei sich quer zur Längs- bzw. Transportrichtung 54 des Förderbandes 45 erstreckenden Seitenkanten 55, eine parallel zur Förderrichtung 54 angeordnete freie Seitenkante 56 und eine Seitenkante 57 auf, an der ein Verschiebemechanismus 59 befestigt ist. Die Seitenkante 57 mit dem Verschiebemechanismus 59 zeigt zum Portalrahmen 10 und die freie Seitenkante 56 der Depalettierplatte 53 in Richtung zum freien Ende 24 des Depalettierarms 11. Die Depalettierplatte 53 besteht vorzugsweise aus einem ca. 1,5 mm starken Nirosta-Blech, auf dem zweckmäßigerweise eine glatte Beschichtung aufgebracht ist.

Der Verschiebemechanismus 59 für die Depalettierplatte 53 weist zwei Gelenkarme 60 auf, die mit einem Ende an der Seitenkante 57 der Depalettierplatte 53 und mit dem anderen Ende an einer gemeinsamen Welle (nicht dargestellt) befestigt sind. Die Gelenkarme 60 bestehen jeweils aus zwei Gelenkstangen 61, 62, die über ein Scharniergelenk 63a miteinander verbunden sind. Durch Drehen der Welle wird die Depalettierpalette 53 auf dem Förderband 45 aufliegend quer zur Förderrichtung 54 zwischen einer Stellung, bei der die freie Seitenkante 56 der Depalettierplatte 53 über das Förderband 45 in Richtung zum freien Ende des Depalettierarms 11 überkragt, und einer Stellung verschoben, in der die freie Seitenkante 56 der Depalettierplatte 53 sich im Bereich der in Richtung zum Portalrahmen 10 zeigenden Seitenkante 50 des Förderbandes 45 befindet.

Über den Bereich der zum Portalrahmen 10 zeigenden Seitenkante 50 des Förderbandes 45 ist eine in Transportrichtung 54 ausgerichtete Abstreifleiste 63 angeordnet, die aus einer vertikalen schmalen Platte ausgebildet ist. Die Abstreifleiste 63 begrenzt mit dem Förderband 45 einen Spalt 64, dessen Höhe etwa der Materialstärke der Depalletierplatte 53 entspricht. Die Abstreifleiste 63 kann mittels eines weiteren Verschiebemechanismus mit zwei Gelenkarmen 65, die jeweils zwei über ein Scharniergelenk 66 verbundene Gelenkstangen 67, 68 aufweisen und auf einer gemeinsamen Welle 69 sitzen, quer zur Transportrichtung 54 verschoben werden.

An dem in Transportrichtung 54 vorderen Ende des Förderbandes 45 schließt sich ein weiteres zweites endlos geführtes Förderband 70 an, das um zwei Umlaufwalzen 71, 72 gespannt ist, wobei die angrenzend zum Förderband 70 angeordnete Umlaufwalze 71 am Depalettierarm 11 befestigt ist, so daß sie bei einer vertikalen Bewegung des Depalettierarms 11 mit ihm bewegt wird. Die Umlaufwalze 21 ist parallel zu und horizontal neben der Umlaufwalze 49 des ersten Förderbandes 45 angeordnet.

Die vom ersten Förderband 45 entfernte Umlaufwalze 72 ist ortsfest angeordnet, so daß eine Transportverbindung zu einem weiteren ortsfesten dritten endlos geführten Förderband 75 hergestellt ist. Um die bei der vertikalen Bewegung des Depalettierarms 11 auftretenden Abstandsveränderungen zwischen der beweglichen und der ortsfesten Umlaufwalze 71, 72 ausgleichen zu können, sind in bekannter Weise am unteren Trum des Förderbands 70 Ausgleichswalzen 76, 77 vorgesehen, um die der untere Trum des Förderbandes 70 S-förmig geführt ist und die mit Federelementen vorgespannt sind, so daß sie bei Zugbelastung ihre Lage ändern und den S-förmigen Bereich des Förderbandes strecken.

Nachfolgend wird die Funktionsweise der erfindungsgemäßen Vorrichtung zum Depalettieren näher erläutert:

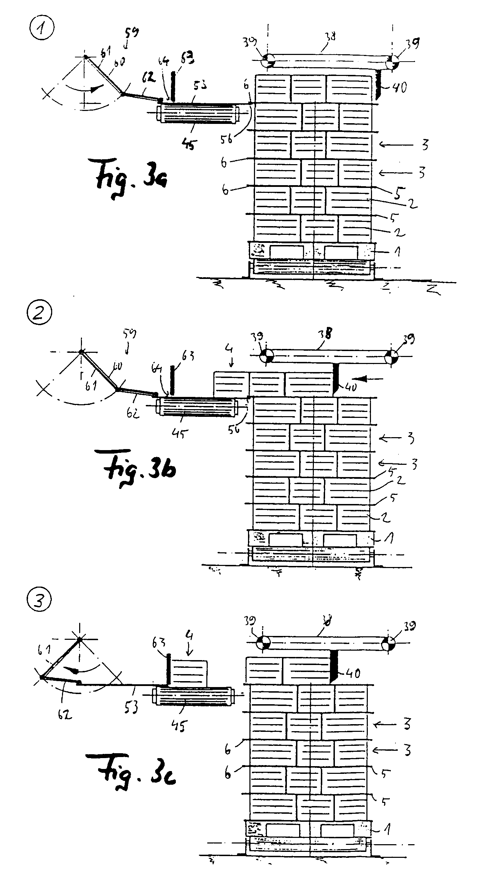

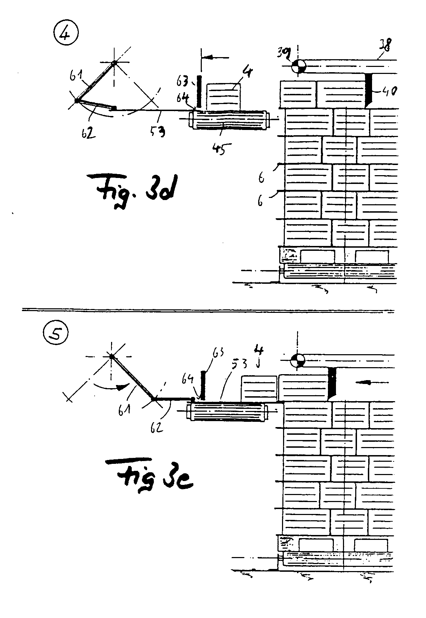

Zu Beginn des Depalettierens einer Stapellage 3 befindet sich die Abschiebeleiste 40 in ihrer Ausgangsstellung im Bereich des freien Endes 24 des Depalettierarms 11, so daß beim Absenken des Depalettierarms 11 über einer mit Produkten 2 beladenen Palette 1 die oberste Produktlage 3 von der Abschiebeleiste 40 hintergriffen wird (Fig. 3a). Der Depalettierarm 11 wird soweit abgesenkt, daß die Depalettierplatte 53 unterhalb der Zwischenplatte 5 zwischen der obersten Stapellage 3 und der nachfolgenden Stapellage 3 angeordnet ist. Die Depalettierplatte 53 wird dann unter der Abstreifleiste 63 hindurch in Richtung zu den auf der Palette 1 gestapelten Produkten 2 geschoben, bis die Depalettierplatte 53 mit ihrer freien Seitenkante 56 unter den Überstand 6 der zwischen den Stapellagen 3 vorstehenden Zwischenplatte 5 angeordnet ist. Durch Anheben des Depalettierarms 11 wird die freie Seitenkante 56 der Depalettierplatte 53 mit dem Überstand 6 der Zwischenplatte 5 in Anlage gebracht, so daß sich die Depalettierplatte 53 in einer Übernahmeposition befindet (Fig. 3a, 3b, 3e). In dieser Übernahmeposition bilden die Zwischenplatte 5 und die Depalettierplatte 53 eine einen Spalt zwischen dem Förderband 45 und der beladenen Palette 1 überbrückende horizontale Fläche mit nur einer kleinen Stufe beim Übergang von der Zwischenplatte 5 auf die Depalettierplatte 53. Die Höhe der Stufe entspricht der Materialstärke der Zwischenplatte 5.

Die oberste Zwischenplatte 5 wird seitlich mittels der Klemmbacken 43 lagefixiert, die jeweils durch eines der Stellglieder 44 gegen die Zwischenplatte 5 gedrückt werden.

Nun wird die Abschiebeleiste 40 betätigt und schiebt die gesamte oberste Stapellage 3 in Richtung zur Depalettierplatte 53, bis eine der Stapelreihen 4 vollständig auf der Depalettierplatte 53 aufliegt (Fig. 3b). Der Verschiebeweg der Abschiebeleiste 40 kann von einer entsprechenden Steuereinrichtung gesteuert werden, in die beispielsweise ein Palettiermuster mit allen Stapellagen und Stapelreihen und deren Abmessung gespeichert ist, so daß der Verschiebeweg vorbestimmt ist und entsprechend von der Steuereinrichtung gesteuert wird. Es ist aber auch möglich, die Verschiebung der Stapellage 3 mit einer geschlossenen Regelschleife zu regeln, die beispielsweise die Zwischenflächen zwischen den einzelnen Stapelreihen mittels optischer Sensoren wahrnimmt und den Zeitpunkt exakt feststellt, wann eine abzuführende Stapelreihe 4 von der Zwischenplatte 5 auf die Depalettierplatte 53 abgeschoben worden ist, um dann den Verschiebevorgang zu unterbrechen.

Zum Ablegen der auf der Depalettierplatte 53 aufliegenden Stapelreihe 4 wird die Depalettierplatte 53 in Richtung zum Portalrahmen 10 verschoben, wobei die Depalettierplatte 53 die Abstreifleiste 63 mit geringem Abstand unterfährt, bis die freie Seitenkante 56 der Depalettierplatte 53 unter der Abstreifleiste 63 hindurchgezogen worden ist. Hierdurch stoßen die Produkte 2 der auf der Depalettierplatte 53 liegenden Produktreihe 4 gegen die Abstreifleiste 63 und werden von der Depalettierplatte 53 abgestreift, so daß sie auf dem Förderband 45 abgelegt werden (Fig. 3c).

Das Abstreifen erlaubt das Ablegen der Stapelreihe 4 an einer beliebigen Stelle auf dem Förderband 45, die durch die Lage der Abstreifleiste 63 festgelegt ist. Zudem werden durch das Abstreifen die einzelnen Produkte 2 bzw. Produktstapel an der Abstreifleiste 63 gleichmäßig mit ihren an der Abstreifleiste 63 anliegenden Seitenkanten oder Seitenflächen ausgerichtet, so daß für den Weitertransport auf den Förderbändern 45, 70, 75 die Produkte 2 immer in der exakt gleichen Ausgangsstellung abgelegt werden. Hierdurch wird ein störungsfreier Weitertransport ohne eine zusätzliche zum Führen bzw. zum Ausrichten der Produkte 2 vorzusehende Einrichtung gewährleistet. Vor dem Abstransport auf dem Förderband 45 kann die Abstreifleiste 63 durch eine Horizontalverschiebung in Richtung zum Portalrahmen 10 um bspw. etwa 25 mm von der auf dem Förderband 45 aufliegenden Stapelreihe 4 entfernt (Fig. 3d) werden, so daß die Stapelreihe 4 auf dem Förderband 45 freiliegt.

Nach dem Abtransport einer Stapelreihe 4 wird der Depalettierarm 11 um beispielsweise etwa 10 bis 15 mm abgesenkt, so daß die Depalettierplatte 53 in Richtung zum freien Ende 24 des Depalettierarms 11 geschoben werden kann, bis sie wieder mit ihrer freien Seitenkante 56 unter dem Überstand 6 der obersten Zwischenplatte 5 angeordnet ist und durch eine entsprechende Aufwärtsbewegung des Depalettierarms 10 mit diesem in Anlage gebracht wird.

Dann wird der Abschiebeleiste 40 wieder eine Stapelreihe 4 auf die Depalettierplatte 53 geschoben und die auf der Depalettierplatte 53 aufliegende Stapelreihe 4 mit der Abstreifleiste 63 auf das Förderband 45 abgelegt und abtransportiert.

Dieser Vorgang des Abschiebens und Abstreifens der Stapelreihen 4 wird so oft wiederholt, bis die oberste Stapelreihe 3 vollständig von der Palette 1 und mit dem Förderband 45 abtransportiert worden ist. Die dann freiliegende Zwischenplatte 5 wird abgenommen. Dies erfolgt vorzugsweise mit einem nicht dargestellten, mit Saugnäpfen versehenen Hubarm, der sich oben auf der Zwischenplatte 5 festsaugt und sie abhebt.

Vor dem Abschieben der nächsten Stapellage 3 wird die Abschiebeleiste 40 wieder in ihre Ausgangsstellung zurückgefahren, so daß sie die zuoberst liegende Stapellage 3 hintergreifen kann. Der Depalettierarm 10 wird dann wiederum mit all seinen Einrichtungen, wie Abschiebeleiste 40, Förderband 45, Depalettierarm 53 abgesenkt, um die nun als oberste Stapellage 3 freiliegende Produktlage in der oben beschriebenen Art und Weise abzuschieben, wobei die Stapelreihen vereinzelt und mit dem Förderband abtransportiert werden.

Ein wesentliches der Erfindung zugrundeliegendes Prinzip ist die Verwendung einer Depalettierplatte 53 zum Vereinzeln der einzelnen Stapelreihen 4, wobei die zu vereinzelnde bzw. abzuführende Stapelreihe 4 von der Zwischenplatte 5 auf die Palettierplatte 53 geschoben wird, und dann durch Unterstreifen der Depalettierplatte 53 an der Abstreifleiste 63 auf einen Förderer abgelegt wird. Die Depalettierplatte 53 kann mit einer entsprechenden Abstreifeinrichtung auch an einem separaten Hubarm befestigt sein, um die Stapelreihen 4 an den unterschiedlichen Höhen der Stapellagen aufzunehmen und auf einen ortsfesten Förderer abzulegen.

Gleichermaßen kann der Depalettierarm 11 ortsfest angeordnet sein, wobei die Palette 1 mit einer entsprechenden Hubeinrichtung angehoben wird, um die einzelnen Stapellagen auf die Höhe der Depalettierplatte 53 auszurichten. Eine solche Hubeinrichtung kann bei mit relativ leichten Produkten beladenen Paletten zweckmäßig sein.

Der mit der Erfindung verwendete Förderer ist nicht auf ein Förderband beschränkt, sondern es können auch andere Förderer, wie z.B. ein Transportwalzensystem, verwendet werden.

Das Vorsehen harter, glatter Platten als Zwischenplatten bzw. als Depalettierplatte bewirkt eine Minimierung der Reibung zwischen den Platten und den Produkten beim Verschieben bzw. Abstreifen derselben, so daß die Produkte schonend von der Palette abgenommen werden.

## Patentansprüche

1. Verfahren zum Depalettieren von quaderförmigen Produkten (2), die in mehreren Stapellagen (3) auf einer Palette (1) gestapelt sind, wobei die Produkte in jeder Stapellage in Reihen (4) unterteilt angeordnet sind und zwischen den einzelnen Stapellagen jeweils eine Zwischenplatte (5) angeordnet ist, die seitlich mit einem Überstand (6) an den Stapellagen vorsteht, wobei
eine horizontal angeordnete Depalettierplatte (53) von unten gegen den Überstand (6) der Zwischenplatte (5) angelegt wird, eine Stapelreihe (4) der auf der Zwischenplatte aufliegenden Produkte auf die Depalettierplatte (53) abgeschoben wird, und die Produkte über einem Förderer von der Depalettierplatte (53) abgestreift und auf dem Förderer abgelegt werden.

2. Verfahren nach Anspruch 1, gekennzeichnet durch folgende Verfahrensschritte:
- horizontales Bewegen der nicht beladenen Depalettierplatte (53) in Richtung zu den quaderförmigen Produkten (2), bis eine freie Seitenkante der Depalettierplatte unter dem Überstand (6) der Zwischenplatte (5) angeordnet ist,
- Anheben der Depalettierplatte (53), bis sie mit ihrer freien Seitenkante am Überstand (6) anliegt,
- Abschieben der Produkte auf die Depalettierplatte (53),
- horizontales Bewegen der mit einer Stapelreihe (4) beladenen Depalettierplatte (53) weg von den Produkten bis über einen Bereich des Förderers und Abstreifen der Produkte unter Weiterbewegung der Depalettierplatte (53) zum Ablegen der Produkte auf den Förderer,
- Absenken der Depalettierplatte, so daß sie wieder mit ihrer freien Seitenkante unter den Überstand der Zwischenplatte bewegt werden kann.

3. Verfahren nach Anspruch 2,
dadurch **gekennzeichnet**,
daß die Depalettierplatte (53) während der horizontalen Bewegungen auf den Förderer gleitet und der Förderer beim Anheben bzw. Absenken der Depalettierplatte (53) mitbewegt wird.

4. Verfahren nach einem der Ansprüche 1 bis 3,
dadurch **gekennzeichnet**,
daß die Zwischenplatte (5) beim Abschieben der Produkte auf die Depalettierplatte (53) in ihrer Lage festgeklemmt wird.

5. Verfahren nach einem der Ansprüche 1 bis 4,
dadurch **gekennzeichnet**,
daß die Produkte mit einer über dem Förderer angeordneten Abstreifleiste (63) von der Depalettierplatte (53) abgeschoben werden, und die Abstreifleiste (63) danach aus der Anlage mit den Produkten gelöst wird.

6. Verfahren nach einem der Ansprüche 1 bis 5,
dadurch **gekennzeichnet**,
daß nach dem Abschieben einer vollständigen Stapellage (3) die nun freiliegende, oberste Zwischenplatte (5) entfernt wird.

7. Vorrichtung zum Depalettieren von Paletten (1), auf die Produkte (2) in mehreren Stapellagen (3) gestapelt sind, wobei die Produkte (2) in jeder Stapellage (3) in Stapelreihen (4) unterteilt angeordnet sind und zwischen den einzelnen Stapellagen (3) jeweils eine Zwischenplatte (5) eingebracht ist, wobei die Vorrichtung zum Depalettieren von Paletten (1) einen Förderer zum Abfördern der Produkte (2) und eine Einrichtung zum Abziehen bzw. Abschieben einer Stapellage (3) aufweist, **dadurch gekennzeichnet**, daß die Zwischenplatte (5), seitlich mit einem Überstand (6) an den Stapellagen (3) vorsteht, wobei
eine Depalettierplatte (53), die in einer Übernahmeposition von unten gegen den Überstand (6) einer der Zwischenplatten (5) anlegbar ist, so daß eine Stapelreihe (4) von der Zwischenplatte (5) auf die Depalettierplatte (53) abgeschoben werden kann, und einer Einrichtung zum Abstreifen der auf der Depalettierplatte (53) lagernden Stapelreihe (4), die eine Abstreifleiste (63) aufweist, so daß mit der Abstreifleiste (63) die Stapelreihe (4) abgestreift und auf dem Förderer abgelegt wird.

8. Vorrichtung nach Ansprüch 7,
dadurch gekennzeichnet,
daß die Depalettierplatte (53) in der Übernahmeposition auf dem Förderer aufliegt und die Abstreifleiste (63) über dem Förderer an seinem von der Palette (1) entfernten Randbereich angeordnet und parallel zu einer Transportrichtung (54) des Förderers ausgerichtet ist.

9. Vorrichtung nach Anspruch 8,
dadurch gekennzeichnet,
daß die Abstreifleiste (63) und der Förderer einen Spalt (64) begrenzen, dessen Höhe etwa der Materialstärke der Depalettierplatte (53) entspricht.

10. Vorrichtung nach Anspruch 8 oder 9,
dadurch gekennzeichnet,
daß eine Einrichtung zum horizontalen Querverschieben der Abstreifleiste (63) vorgesehen ist.

11. Vorrichtung nach einem der Ansprüche 7 bis 10,
dadurch gekennzeichnet,
daß die Zwischenplatte (5) aus einem harten, glatten Material besteht.

12. Vorrichtung nach einem der Ansprüche 7 bis 11,
dadurch gekennzeichnet,
daß die Depalettierplatte (53) eine harte, glatte Blechplatte ist, die insbesondere etwa 1,5 mm stark ist und mit einer glatten Beschichtung versehen ist.

13. Vorrichtung nach einem der Ansprüche 7 bis 12,
dadurch gekennzeichnet,
daß der Förderer und die Einrichtung zum Abschieben einer Stapellage an einem Depalettierarm (11) befestigt sind, der aus zwei seitlichen Längsstreben (20, 21) und zwei, die Enden der Längsstreben (20, 21) verbindenden Querstreben (22, 23) besteht, und an einem vertikalen Portalrahmen (11) vertikal verschiebbar befestigt ist.

14. Vorrichtung nach Anspruch 13,
dadurch gekennzeichnet,
daß die Einrichtung zum Abschieben einer Stapellage (3) eine Abschiebeleiste (40) aufweist, die sich parallel zu den Querstreben (22, 23) zwischen den Längsstreben (20, 21) erstreckt und seitlich jeweils an einem Zahnriemen bzw. einer Rollenkette (37, 38) befestigt ist, so daß die Abschiebeleiste (40) eine Stapellage (3) vollständig hintergreifen kann und über die Zahnriemen (37, 38) so angetrieben wird, daß sie die Stapellage (3) von der Zwischenplatte (5) schieben kann.

15. Vorrichtung nach einem der Ansprüche 7 bis 14,
dadurch gekennzeichnet,
daß Klemmbacken (43) zur Lagefixierung der Zwischenplatte (5) vorgesehen sind, die mittels Stellglieder (44) gegen die jeweilige Zwischenplatte (5) gedrückt werden können.

16. Vorrichtung nach einem der Ansprüche 13 bis 15,
dadurch gekennzeichnet,
daß der Förderer ein Förderband (45) ist, das sich quer zu den Längsstreben (20, 21) erstreckt, so daß es parallel zu den Querstreben (22, 23) angeordnet ist und der Abstand zwischen dem Förderband (45) und der vom Portalrahmen (10) entfernten Querstrebe (23) etwas größer als die Tiefe einer Palette (1) ist, so daß die mit Produkten beladene Palette (1) mit ihren Produkten von den Längsstreben (20, 21), der Querstrebe (23) und dem Förderband (45) umfaßt werden kann, wobei zwischen dem Förderband (45) und der Ladung der Palette (1) ein schmaler Spalt verbleiben kann.

17. Vorrichtung nach Anspruch 16,
dadurch gekennzeichnet,
daß die Depalettierplatte (53) auf einem oberen Trum des Förderbandes (45) aufliegt und zumindest ein Gelenkarm (60) vorgesehen ist, der an der Depalettierplatte (53) angreift, um die Depalettierplatte (53) auf dem Förderband in Querrichtung zur Längserstreckung der Abstreifleiste (63) zu verschieben.

18. Vorrichtung nach Anspruch 17,
dadurch gekennzeichnet,
daß der Gelenkarm (60) aus zwei Gelenkstangen (61, 62) besteht, die gelenkig über ein Scharniergelenk (66) miteinander verbunden sind und mit seinem der Depalettierplatte (53) gegenüberliegendem Ende auf einer Welle sitzt, so daß eine Drehbewegung der Welle in eine Schiebebewegung der Depalettierplatte (53) umgewandelt wird.

## Claims

1. Process for the unloading from pallets of square-shaped products (2) stacked on a pallet (1) in several stack layers (3) with the products in each layer arranged divided into rows (4) and with a separator plate (5) positioned between the individual layers, the said plates projecting with a certain lateral overhang (6) beyond the layers,
**such that**
a horizontal pallet-unloading plate (53) is brought from underneath up against the overhang (6) of the separator plate (5), a stack row (4) of the products resting on the separator plate is pushed onto the pallet-unloading plate (53), and the products are moved off the pallet-unloading plate (53) by a conveyor and deposited onto the conveyor.

2. Process according to Claim 1, characterized by the following process steps:
- the unladen pallet-unloading plate (53) is moved horizontally towards the square-shaped products (2) until a free side edge of the pallet-unloading plate is positioned under the overhang (6) of the separator plate (5),
- the pallet-unloading plate is raised until its free side edges make contact with the overhang,
- the product is pushed onto the pallet-unloading plate,
- the pallet-unloading plate, now carrying a stack row, moves horizontally away from the products until it is over an area of the conveyor and the products are moved off as the pallet-unloading plate (53) moves further so as to deposit the products on the conveyor,
- the pallet-unloading plate is lowered so that it can again be moved until its free side edges are underneath the overhang of the separator plate.

3. Process according to Claim 2,
**characterized in that**
the pallet-unloading plate (53) slides onto the conveyor during its horizontal movement and the conveyor moves with the pallet-unloading plate (53) during its upward or downward motion.

4. Process according to any of Claims 1 to 3,
**characterized in that**
while the products are being moved onto the pallet-unloading plate (53), the separator plate (5) is held in a fixed position.

5. Process according to any of Claims 1 to 4,
**characterized in that**
the products are pushed off the pallet-unloading plate (53) by a displacement slat (63) arranged over the conveyor, and the displacement slat (63) then moves out of contact with the products.

6. Process according to any of Claims 1 to 5,
**characterized in that**
when a complete stack layer (3) has been pushed off, the new free, uppermost separator plate (5) is removed.

7. Mechanism for the unloading of pallets (1) upon which products (2) are stacked in several stack layers (3), with the products (2) in each layer (3) arranged divided into rows (4) and with a separator plate (5) positioned between the individual layers (3), such that the mechanism for unloading the pallets (1) comprises a conveyor for conveying the products (2) and a device for pulling or pushing off a layer (3),
**characterized in that**
the separator plate (5) projects laterally with a certain overhang (6) beyond the layers (3), and a pallet-unloading plate (53) can be brought to a take-over position by being raised from underneath against the overhang (6) of one of the separator plates (5), so that a stack row (4) can be pushed from the separator plate (5) onto the pallet-unloading plate (53), and there is a device for displacing the row (4) resting on the pallet-unloading plate (53), the said device comprising a displacement slat (63) such that the row (4) is displaced by the slat (63) and deposited onto the conveyor.

8. Mechanism according to Claim 7,
**characterized in that**
the pallet-unloading plate (53) rests in its take-over position on the conveyor and the displacement slat (63) is positioned over the conveyor at its edge furthest away from the pallet (1) and extends parallel to a transport direction (54) of the conveyor.

9. Mechanism according to Claim 8,
**characterized in that**
the displacement slat (63) and the conveyor delimit a gap (64) whose height corresponds approximately to the thickness of the pallet-unloading plate (53).

10. Mechanism according to Claims 8 or 9,
**characterized in that**
a device is provided which displaces the displacement slat (63) horizontally and transversely.

11. Mechanism according to any of Claims 7 to 10,
characterized in that
the separator plate (5) is made of a hard, smooth material.

12. Mechanism according to any of Claims 7 to 11,
**characterized in that**
the pallet-unloading plate (53) is a hard, smooth sheet, in particular one approximately 1.5 mm thick and coated with a smooth coating.

13. Mechanism according to any of Claims 7 to 12,
**characterized in that**
the conveyor and the device for pushing a stack layer are attached to a pallet-unloading arm (11) consisting of two lateral longitudinal struts (20, 21) and two transverse struts (22, 23) which connect the ends of the longitudinal struts (20, 21), and which is attached to a vertical gantry frame (11) so that it can move vertically.

14. Mechanism according to Claim 13,
**characterized in that**
the device for pushing off a stack layer (3) comprises a pushing slat (40) which extends parallel to the transverse struts (22, 23) between the longitudinal struts (20, 21) and is attached at each side to a toothed belt or a roller chain (37, 38), so that the pushing slat (40) can span completely across and behind a stack layer (3) and is driven by the toothed belts (37, 38) in such a way as to push the stack layer (3) off the separator plate (5).

15. Mechanism according to Claims 7 to 14,
**characterized in that**
clamping jaws (43) are provided to hold the separator plate (5) in position, which can be pressed against the separator plate (5) concerned by means of control elements (44).

16. Mechanism according to any of Claims 13 to 15,
**characterized in that**
the conveyor is a conveyor belt (45) extending transversely to the longitudinal struts (20, 21), so that it is arranged parallel to the transverse struts (22, 23) and the distance between the conveyor belt (45) and the transverse strut (23) furthest from the gantry frame (10) is somewhat larger than the depth of a pallet (1), so that the pallet (1) loaded with its products can be surrounded by the longitudinal struts (20, 21), the transverse strut (23) and the conveyor belt (45), such that a small gap is left between the conveyor belt (45) and the load on the pallet.

17. Mechanism according to Claim 16,
**characterized in that**
the pallet-unloading plate (53) rests on an upper surface of the conveyor belt (45) and at least one hinged bracket (60) is provided, which engages with the pallet-unloading plate (53) in order to push the pallet-unloading plate (53) onto the conveyor belt surface in the direction transverse to the longitudinal extension of the displacement slat (63).

18. Mechanism according to Claim 17,
**characterized in that**
the hinged bracket (60) consists of two hinged rods (61, 62) articulated together by means of a hinge (66), and at the end away from the pallet-unloading plate (53) it is connected to a shaft so that rotary movement of the shaft is converted to a sliding movement of the pallet-unloading plate (53).

## Revendications

1. Procédé de dépalettisation de produits de forme parallélépipédique (2) qui sont empilés en plusieurs couches d'empilage (3) sur une palette (1), lesdits produits étant répartis, dans chacune des couches, dans des rangées (4), des plaques intermédiaires (5) étant respectivement disposées entre ces couches, ces plaques intermédiaires émergeant latéralement desdites couches d'empilage par une partie débordante (6), tandis qu'une plaque de dépalettisation (53), disposée horizontalement, est appliquée par le bas contre la partie débordante (6) de la plaque intermédiaire (5), une rangée d'empilage (4) des produits posés sur la plaque intermédiaire étant poussés sur la plaque de dépalettisation (53), et lesdits produits étant ensuite évacués de la plaque de dépalettisation au-dessus d'un convoyeur et déposés sur celui-ci.

2. Procédé selon la revendication 1, caractérisé par la séquence opératoire comportant les étapes suivantes :
- le déplacement horizontal de la plaque de dépalettisation (53) non chargée en direction des produits (2) de forme parallélépipédique jusqu'à ce qu'une arête latérale libre de ladite plaque vienne se placer sous la partie débordante (6) de la plaque intermédiaire (5),
- le soulèvement de la plaque de dépalettisation (53) jusqu'à ce qu'elle vienne s'appliquer contre la partie débordante (6) par son arête latérale libre,
- la poussée des produits sur la plaque de dépalettisation,
- le déplacement vertical des produits sur la plaque de dépalettisation,
- le déplacement horizontal de la plaque de dépalettisation chargée d'une rangée de produits empilés jusqu'à ce qu'elle parvienne au-dessus d'une partie du convoyeur et l'évacuation des produits avec continuation du mouvement de la plaque de dépalettisation (53) vers la dépose des produits sur le convoyeur,
- l'abaissement de la plaque de dépalettisation afin qu'elle puisse être déplacée à nouveau, par son arête latérale libre, sous la partie débordante de la plaque intermédiaire.

3. Procédé selon la revendication 2, caractérisé en ce que la plaque de dépalettisation (53) glisse sur le convoyeur pendant les mouvements horizontaux, et en ce que ledit convoyeur suit les mouvements de la plaque de dépalettisation (53) pendant qu'elle se soulève et qu'elle s'abaisse.

4. Procédé selon l'une des revendications 1 à 3, caractérisé en ce que le plaque intermédiaire (5) est solidement serrée dans sa position lorsque les produits s'abaissent sur la plaque de dépalettisation (53).

5. Procédé selon l'une des revendications 1 à 4, caractérisé en ce les produits sont évacués de la plaque de dépalettisation (53) au moyen d'une tringle de raclage (63) disposée au-dessus du convoyeur, et en ce que cette tringle de raclage (63) est ensuite éliminée de l'installation avec les produits.

6. Procédé selon l'une des revendications 1 à 5, caractérisé en ce que, après l'évacuation d'une couche d'empilage complète (3), la plaque intermédiaire (5) la plus haute, désormais dégagée, est éliminée.

7. Dispositif de dépalettisation de palettes (1) sur lesquelles sont empilés des produits (2) en plusieurs couches (3), lesdits produits (2) de chaque couche (3) étant répartis en rangées d'empilage (4), des plaques intermédiaires étant respectivement insérées entre les différentes couches (3), le dispositif de dépalettisation de palettes (1) présentant un convoyeur pour l'évacuation des produits (2) et une installation pour le retrait ou l'élimination d'une couche d'empilage (3), caractérisé en ce que la plaque intermédiaire (5) déborde par une partie débordante (6) des couches d'empilage (3), tandis qu'une plaque de dépalettisation (53) dans une position de reprise, est applicable par le bas contre la partie débordante (6) de l'une des plaques intermédiaires (5), ce qui a pour résultat qu'une rangée (4) peut être poussée de la plaque intermédiaire (5) sur la plaque de dépalettisation (53), et comportant un dispositif d'évacuation de la rangée (4) placée sur la plaque de dépalettisation (53) qui est muni d'une tringle de raclage (63), de telle sorte que la rangée (4), raclée à l'aide de cette tringle de raclage (63), soit déposée sur le convoyeur.

8. Dispositif selon la revendication 7, caractérisé en ce que la plaque de dépalettisation (53), dans la position de reprise, s'applique sur le convoyeur, en ce que la tringle de raclage (63) est disposée au-dessus du convoyeur dans sa partie marginale la plus éloignée de la palette (1), et en ce que cette tringle est alignée parallèlement à l'une des directions d'avancement (54) du convoyeur.

9. Dispositif selon la revendication 8, caractérisé en ce que la tringle de raclage (63) et le convoyeur délimitent un interstice (64) dont la hauteur correspond sensiblement à l'épaisseur du matériau constitutif de la plaque de dépalettisation (53).

10. Dispositif selon la revendication 8 ou 9, caractérisé par la présence d'un dispositif pour le transfert transversal dans le plan horizontal de la tringle de raclage (63).

11. Dispositif selon l'une des revendications 7 à 10, caractérisé en ce que la plaque intermédiaire (5) est réalisée en un matériau dur, lisse.

12. Dispositif selon l'une des revendications 7 à 11, caractérisé en ce que la plaque de dépalettisation (53) est une plaque de tôle dure, lisse, d'une épaisseur d'environ 1,5 mm et munie d'un revêtement lisse.

13. Dispositif selon l'une des revendications 7 à 12, caractérisé en ce que le convoyeur et le dispositif pour l'évacuation d'une couche empilée sont fixés sur un bras de dépalettisation (11) qui est formé de deux longerons latéraux (20, 21) et de deux traverses (22, 23) reliant les extrémités des longerons (20, 21), ledit bras étant fixé sur un portique vertical (11) de manière verticalement coulissable.

14. Dispositif selon la revendication 13, caractérisé en ce que le dispositif pour l'évacuation d'une couche empilée (3) présente une tringle d'évacuation (40) qui s'étend parallèlement aux traverses (22, 23) entre les longerons (20, 21) et qui est fixée latéralement, respectivement sur une courroie dentée et une chaîne à rouleaux (37, 38), de sorte que ladite tringle (40) peut saisir intégralement une couche empilée (3) et qu'elle est entraînée par l'intermédiaire des courroies dentées (37, 38) de telle manière qu'elle puisse pousser ladite couche (3) en l'évacuant de la plaque intermédiaire (5).

15. Dispositif selon l'une des revendications 7 à 14, caractérisé par la présence de mâchoires de serrage (43) pour fixer la position de la plaque intermédiaire (5), lesquelles peuvent être serrées au moyen d'éléments de réglage (44) contre la plaque intermédiaire (5) respective.

16. Dispositif selon l'une des revendications 13 à 15, caractérisé en ce que le convoyeur est un tapis de convoyage (45) qui s'étend transversalement par rapport aux longerons (20, 21) de telle manière qu'il est disposé parallèlement aux traverses (22, 23), et en ce que la distance entre le tapis convoyeur (45) et la traverse (23) la plus éloignée du portique (10) est légèrement supérieure à la profondeur d'une palette (1), de telle sorte que la palette (1) chargée de produits puisse être saisie par les longerons (20, 21), la traverse (23) et le tapis convoyeur (45), tandis qu'entre ce tapis (45) et le chargement de la palette (1) peut subsister un léger interstice.

17. Dispositif selon la revendication 16, caractérisé en ce que la plaque de dépalettisation (53) s'applique sur un brin supérieur du tapis (45) avec présence d'au moins un bras articulé (60) qui agit sur la plaque de dépalettisation (53) afin de déplacer cette plaque (53) sur le tapis transporteur en direction transversale par rapport à l'extension longitudinale de la tringle de raclage 63.

18. Dispositif selon la revendication 17, caractérisé en ce que le bras articulé (60) est constitué de deux tiges (61, 62) qui sont reliées de manière articulée par une charnière (66), ledit bras (60) reposant, par son extrémité faisant face à la plaque de dépalettisation (53), sur un arbre, de telle manière que tout mouvement de rotation de l'arbre est transformé en un mouvement de poussée de la plaque de dépalettisation (53).
